# EUROPEAN PATENT APPLICATION

(11) **EP 3 859 479 A1**
(43) Date of publication of application: **04.08.2021**
(21) Application number: 19873665.4
(22) Date of filing: 16.10.2019
(51) Int. Cl.: G05D 1/10, B64D 1/18

(54) **METHOD FOR DETERMINING DISTRIBUTION INFORMATION, AND CONTROL METHOD AND DEVICE FOR UNMANNED AERIAL VEHICLE**

(30) Priority: 18.10.2018 CN 201811217967
(71) Applicant: Guangzhou Xaircraft Technology Co., Ltd, Tianhe District Guangzhou, Guangdong 510000 (CN)
(72) Inventor: DAI, Shuangliang, Guangzhou, Guangdong 510000 (CN)
(74) Representative: Dilg, Haeusler, Schindelmann Patentanwaltsgesellschaft mbH
(86) International application number: PCT/CN2019/111515
(87) International publication number: WO 2020/078396

(57) **Abstract**

Provided are a method for determining distribution information and a control method and device for an unmanned aerial vehicle. The control method comprises: acquiring image information of a target region (S102); inputting the image information to a predetermined model for analysis, so as to obtain distribution information of a target object in the target region (S104), the predetermined model being obtained by training with multiple data sets, and each data set in the multiple data sets comprising: sample image information of the target region, and a label used to identify distribution information of the target object in the sample image information; and controlling, according to the distribution information, the unmanned aerial vehicle to spray pesticide on the target object (S106). The present invention resolves issues, such as pesticide waste and residue, caused by difficulty to distinguish crops from weeds.

## Description

### Cross-Reference to Related Applications

The present disclosure claims priority to Chinese Patent Application No. 201811217967.X, filed with the Chinese Patent Office on October 18, 2018, entitled "Method for Determining Distribution Information, and Method and Device for Controlling Unmanned Aerial Vehicle", which is incorporated herein by reference in its entirety.

### Technical Field

The present disclosure relates to the field of plant protection, and in particular to a method for determining distribution information, and a method and device for controlling an unmanned aerial vehicle.

### Background Art

Currently, unmanned aerial vehicles basically perform general spraying of herbicides or defoliants. The general spraying may cause a lot of waste of agrochemicals and agrochemical residues, or insufficient spraying of some places severely invaded by weeds, resulting in great economic loss.

### Summary

Embodiments provide a method for determining distribution information, and a method and device for controlling an unmanned aerial vehicle, so as to solve at least the technical problems in the related art, such as waste of agrochemicals and agrochemical residues caused by difficulty in distinguishing crops from weeds.

According to an aspect of the embodiments, a method for controlling an unmanned aerial vehicle is provided. The method includes: acquiring image information to be processed of a target area; inputting the image information to be processed into a preset model for analysis so as to obtain distribution information of a target object in the image to be processed, wherein the preset model is obtained by being trained with multiple sets of data, each of the multiple sets of data including: sample image information of a target area, and a label for identifying distribution information of the target objects in the sample image information; and controlling the unmanned aerial vehicle to spray a chemical on the target objects according to the distribution information corresponding to the image information to be processed.

Optionally, the step of training the preset model includes:
acquiring sample image information, marking positions of the target objects in the sample image information, so as to obtain a label of distribution information of the target objects corresponding to the sample image information, and inputting the sample image information and the corresponding label into a preset model;
processing the sample image information by using a first convolutional network model in the preset model to obtain a first convolved image of the sample image information;
processing the sample image information by using a second convolutional network model in the preset model to obtain a second convolved image of the sample image information, wherein different convolution kernels are used in the first convolutional network model and the second convolutional network model;
combining the first convolved image and the second convolved image of the sample image information to obtain a combined image;
performing deconvolution processing on the combined image, and performing backpropagation according to the result of the deconvolution processing and the label of the sample image information to adjust parameters for each part of the preset model.

Optionally, the inputting the image information to be processed into a preset model for analysis so as to obtain distribution information of a target object in the image information to be processed includes:
inputting the image information to be processed into the trained preset model;
processing the image information to be processed by using the first convolutional network model in the preset model to obtain a first convolved image of the image information to be processed;
processing the image information to be processed by using the second convolutional network model in the preset model to obtain a second convolved image of the image information to be processed;
combining the first convolved image and the second convolved image of the image information to be processed, and performing deconvolution processing on the combined image to obtain a density map corresponding to the image information to be processed as distribution information of the target objects in the image information to be processed.

Optionally, a value of a pixel in the density map denotes a value of distribution density of the target objects at a position corresponding to the pixel.

Optionally, the above-mentioned sample image information includes: a density map of the target objects, and the density map is used for reflecting a magnitude of density of the target objects in each distribution area in the target area.

Optionally, the above-mentioned density map has a mark for indicating the magnitude of the density of the target objects.

Optionally, the above-mentioned distribution information includes at least one of: a density of the target objects in each distribution area in the target area, and a size of the distribution area where the target objects are located. The controlling the unmanned aerial vehicle to spray a chemical on the target objects according to the distribution information includes: determining, according to the density of the target objects in the distribution area, an amount or a duration of spray of the chemical to be sprayed from the unmanned aerial vehicle onto the distribution area; and/or determining a chemical spraying range according to the size of the distribution area where the target objects are located.

Optionally, the distribution information further includes: a distribution area of the target objects in the target area. The method further includes: determining a flight route of the unmanned aerial vehicle according to the position of the distribution area of the target objects; and controlling the unmanned aerial vehicle to move along the flight route.

Optionally, after controlling the unmanned aerial vehicle to spray a chemical on the target objects according to the distribution information, the method further includes: detecting remaining distribution areas in the target area for the unmanned aerial vehicle, wherein the remaining distribution areas are distribution areas in the target area which have not be sprayed with the chemical; determining densities of the target objects in the remaining distribution areas and a total size of the remaining distribution areas; determining a total chemical amount required in the remaining distribution areas according to the densities of the target objects in the remaining distribution areas and the total size of the remaining distribution areas; determining a difference between a chemical amount remaining in the unmanned aerial vehicle and the total chemical amount; comparing the difference with a preset threshold, and adjusting the flight route of the unmanned aerial vehicle according to the comparison result.

Optionally, before controlling the unmanned aerial vehicle to spray a chemical on the target objects according to the distribution information, the method further includes: determining a target amount of the chemical to be used from the unmanned aerial vehicle according to a size of a distribution area of the target objects in the target area and a magnitude of density of the target objects in the distribution area, in the distribution information.

According to another aspect of the embodiments, a device for controlling an unmanned aerial vehicle is provided. The device includes: an acquisition module configured to acquire image information of a target area; an analysis module configured to input the image information to a preset model for analysis so as to obtain distribution information of a target object in the target area, wherein the preset model is obtained by being trained with multiple sets of data, each of the multiple sets of data including: sample image information of a target area, and a label for identifying distribution information of the target objects in the sample image information; and a control module configured to control the unmanned aerial vehicle to spray a chemical on the target objects according to the distribution information.

According to still another aspect of the embodiments, an unmanned aerial vehicle is provided. The unmanned aerial vehicle includes: an image capturing device configured to acquire image information of a target area; and a processor configured to: input the image information to a preset model for analysis so as to obtain distribution information of a target object in the target area, wherein the preset model is obtained by being trained with multiple sets of data, each of the multiple sets of data including: sample image information of a target area, and a label for identifying distribution information of the target objects in the sample image information; and control the unmanned aerial vehicle to spray a chemical on the target objects according to the distribution information.

According to yet another aspect of the embodiments, an unmanned aerial vehicle is provided. The unmanned aerial vehicle includes: a communication module configured to receive image information of a target area from a specified equipment, the specified equipment including a network-side server or a surveying drone; and a processor configured to: input the image information to a preset model for analysis so as to obtain distribution information of a target object in the target area, wherein the preset model is obtained by being trained with multiple sets of data, each of the multiple sets of data including: sample image information of a target area, and a label for identifying distribution information of the target objects in the sample image information; and control the unmanned aerial vehicle to spray a chemical on the target objects according to the distribution information.

According to a further aspect of the embodiments, a storage medium is provided. The storage medium includes a program stored therein, wherein when the program is running, an equipment where the storage medium is located is controlled to execute the method for determining distribution information described above.

According to a further aspect of the embodiments, a processor is provided. The processor is configured to run a program, wherein the program is run to execute the method for determining distribution information described above.

According to a further aspect of the embodiments, a method for determining distribution information of a target object is provided. The method includes: acquiring image information of a target area; inputting the image information to a preset model for analysis so as to obtain distribution information of a target object in the target area, wherein the preset model is obtained by being trained with multiple sets of data, each of the multiple sets of data including: sample image information, and a label for identifying distribution information of the target objects in the sample image information.

Optionally, the step of training the preset model includes:
acquiring sample image information, marking positions of the target objects in the sample image information, so as to obtain a label of distribution information of the target objects corresponding to the sample image information, and inputting the sample image information and the corresponding label into a preset model;
processing the sample image information by using a first convolutional network model in the preset model to obtain a first convolved image of the sample image information;
processing the sample image information by using a second convolutional network model in the preset model to obtain a second convolved image of the sample image information, wherein different convolution kernels are used in the first convolutional network model and the second convolutional network model;
combining the first convolved image and the second convolved image of the sample image information to obtain a combined image;
performing deconvolution processing on the combined image, and performing backpropagation according to the result of the deconvolution processing and the label of the sample image information to adjust parameters for each part of the preset model.

Optionally, the inputting the image information to be processed into a preset model for analysis so as to obtain distribution information of a target object in the image information to be processed includes:
inputting the image information to be processed into the trained preset model;
processing the image information to be processed by using the first convolutional network model in the preset model to obtain a first convolved image of the image information to be processed;
processing the image information to be processed by using the second convolutional network model in the preset model to obtain a second convolved image of the image information to be processed;
combining the first convolved image and the second convolved image of the image information to be processed, and performing deconvolution processing on the combined image to obtain a density map corresponding to the image information to be processed as distribution information of the target objects in the image information to be processed.

Optionally, a value of a pixel in the density map denotes a value of distribution density of the target objects at a position corresponding to the pixel.

Optionally, the sample image information includes: a density map of the target objects, and the density map is used for reflecting a magnitude of density of the target objects in each distribution area in the target area.

Optionally, the density map has a mark for indicating the magnitude of the density of the target objects.

Optionally, when there are multiple target areas and the multiple target areas are located in different sales areas, a target sales area of a chemical is determined according to a density map of the target objects in the multiple target areas.

Optionally, the distribution information includes: a distribution area of the target objects in the target area. The method described above further includes: determining a flight route of an unmanned aerial vehicle according to the position of the distribution area of the target objects.

Optionally, after inputting the image information to a preset model for analysis so as to obtain distribution information of a target object in the target area, the method further includes: determining the type of the target object; determining chemical application information indicating application of a chemical to each subarea in the target area according to the type and the distribution information, the chemical application information including a type and a target spray amount of the chemical to be applied to the target objects in the subarea of the target area; adding marking information for identifying the chemical application information to the image information of the target area to obtain a prescription map of the target area.

Optionally, the target area is a farmland to which the chemical is to be applied, and the target objects are weeds.

In an embodiment of the present disclosure, image information of a target area is acquired; the image information is input to a preset model for analysis so as to obtain distribution information of a target object in the target area, where the preset model is obtained by being trained with multiple sets of data, each of the multiple sets of data including: image information of a target area, and a label for identifying distribution information of the target objects in the image information; and an unmanned aerial vehicle is controlled to spray a chemical on the target objects according to the distribution information. This accomplishes the purpose of targetedly controlling a spray amount of a chemical depending on the distribution density of weeds in different areas, so as to achieve the technical effect of setting a spray amount of a chemical in connection with the distribution density of weeds in different areas, reducing the use of agrochemicals, and increasing the spraying efficiency, thereby solving the technical problems in the related art, such as waste of agrochemicals and agrochemical residues caused by difficulty in distinguishing crops from weeds.

### Brief Description of the Drawings

The drawings described herein are intended to provide a further understanding of the present disclosure and constitute a part of the present disclosure. Exemplary embodiments of the present disclosure and descriptions thereof are intended to explain the present disclosure and are not intended to improperly limit the present disclosure. In the figures:
FIG. 1 is a schematic flowchart of a method for controlling an unmanned aerial vehicle according to an embodiment of the present disclosure;
FIG. 2 is a schematic flowchart of training a preset model according to an embodiment of the present disclosure;
FIGS. 3a and 3b are schematic diagrams of sample images and markings thereon according to an embodiment of the present disclosure.
FIG. 4 is another schematic flowchart of training a preset model according to an embodiment of the present disclosure;
FIG. 5 is a schematic diagram of a density map according to an embodiment of the present disclosure;
FIG. 6 is a schematic structural diagram of an optional device for controlling an unmanned aerial vehicle according to an embodiment of the present disclosure;
FIG. 7 is a schematic structural diagram of an optional unmanned aerial vehicle according to an embodiment of the present disclosure;
FIG. 8 is a schematic structural diagram of another optional unmanned aerial vehicle according to an embodiment of the present disclosure; and
FIG. 9 is a schematic flowchart of a method for determining distribution information according to an embodiment of the present disclosure.

### Detailed Description of the Embodiments

The technical solutions of the embodiments of the present disclosure will be described below clearly and completely with reference to the drawings of the embodiments of the present disclosure, in order to enable those skilled in the art to better understand the solutions of the present disclosure. It is apparent that the embodiments to be described are some, but not all of the embodiments of the present disclosure. All the other embodiments obtained by those of ordinary skill in the art in light of the embodiments of the present disclosure without inventive efforts will fall within the scope of the present disclosure as claimed.

It should be noted that the terms such as "first" and "second" in the specification, the claims, and the above accompanying drawings of the present disclosure are intended to distinguish between similar objects but do not necessarily indicate a specific order or sequence. It should be understood that data used in this way are interchangeable in a proper circumstance, so that the embodiments of the present disclosure described herein can be implemented in other orders than those illustrated or described herein. In addition, the terms "including", "comprising", "having", and any variants thereof are intended to cover non-exclusive inclusions. For example, a process, method, system, product, or device that includes a list of steps or units is not necessarily limited to those steps or units expressly listed, but may include other steps or units not expressly listed or inherent to such a process, method, product, or device.

According to an embodiment of the present disclosure, an embodiment of a method for controlling an unmanned aerial vehicle is provided. It should be noted that the steps shown in a flowchart of the accompanying drawings may be executed in a computer system containing, for example, a set of computer executable instructions. Moreover, although a logical sequence is shown in the flowchart, the steps shown or described may be performed in an order different from that shown here in some cases.

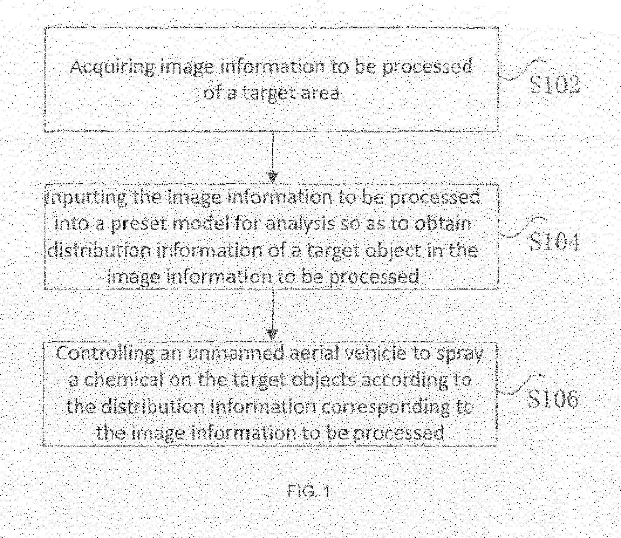

FIG. 1 is a schematic flowchart of a method for controlling an unmanned aerial vehicle according to this embodiment. As shown in FIG. 1, the method includes the following steps.

In step S102, image information to be processed of a target area is acquired.

Optionally, the image information to be processed may be obtained by shooting an image of the target area by an image capturing device arranged on the unmanned aerial vehicle. The target area may be one or more pieces of farmland to which a chemical (or an agrochemical) is to be applied. The unmanned aerial vehicle may be equipped with a positioning system so as to determine information on the size and the latitude and longitude of the current target area according to the positioning system.

In step S104, the image information to be processed is input to a preset model for analysis so as to obtain distribution information of a target object in the target area.

Optionally, the target objects may be weeds in farmland.

Here, the preset model is obtained by being trained with multiple sets of data. Each of the multiple sets of data includes: sample image information of a target area, and a label for identifying distribution information of the target objects in the sample image information.

For example, a weed recognition model for recognizing weed types may be trained. The weed recognition model is obtained by being trained with multiple sets of data. Each of the multiple sets of data includes: sample image information of a target area, and a label for identifying distribution information of the target objects in the sample image information.

Optionally, after image information of the target area is acquired, the image information is input to a preset weed recognition model for analysis so as to obtain the type of the target objects in the target area, where the target objects are weeds.

In step S106, the unmanned aerial vehicle is controlled to spray a chemical on the target objects according to the distribution information corresponding to the image to be processed.

The distribution information may be: a density of the target objects in each distribution area in the target area, and a size of the distribution area where the target objects are located.

The controlling the unmanned aerial vehicle to spray a chemical on the target objects according to the distribution information may be implemented in the following ways.

An amount or a duration of spray of the chemical to be sprayed from the unmanned aerial vehicle onto the distribution area may be determined according to the density of the target objects in the distribution area; and/or a chemical spraying range may be determined according to the size of the distribution area where the target objects are located.

Optionally, if the target objects are distributed at a higher density in a distribution area, the chemical is sprayed from the unmanned aerial vehicle onto the corresponding distribution area in a greater amount for a longer duration. If a distribution area where the target objects are located has a greater size, the chemical is sprayed from the unmanned aerial vehicle over a greater range. The density of the target objects in a distribution area and the size of the distribution area of the target objects are taken into comprehensive consideration to determine the amount of the chemical to be sprayed from the unmanned aerial vehicle onto the corresponding distribution area. For example, the spray amount is determined according to the magnitude of the density of the target objects in the distribution area. Here, the range of spray of the chemical may be a vertical range or a horizontal range.

The information on the distribution of the target objects further includes: a distribution area of the target objects in the target area. Specifically, a pixel region in the image corresponding to a distribution area in the image may be determined according to the acquired image information of the target area, and/or a latitude and longitude range occupied by the target objects in the target area may be obtained by a positioning device.

Optionally, a flight route of the unmanned aerial vehicle may be determined according to the position of the distribution area of the target objects, and the unmanned aerial vehicle may be controlled to move along the flight route.

Specifically, the flight route may be determined by avoiding areas free of weeds, and the unmanned aerial vehicle may be controlled to move along the flight route.

After the unmanned aerial vehicle is controlled to spray a chemical on the target objects according to the distribution information, the following operations may be further performed.

Remaining distribution areas in the target area are detected for the unmanned aerial vehicle, wherein the remaining distribution areas are distribution areas in the target area which have not be sprayed with the chemical; the densities of the target objects in the remaining distribution areas and the total size of the remaining distribution areas are determined; a total chemical amount required in the remaining distribution areas is determined according to the densities of the target objects in the remaining distribution areas and the total size of the remaining distribution areas; a difference between the chemical amount remaining in the unmanned aerial vehicle and the total chemical amount is determined; the difference is compared with a preset threshold, and the flight route of the unmanned aerial vehicle is adjusted according to the comparison result.

Optionally, when the difference between the remaining chemical amount and the above-mentioned total chemical amount is a negative value, the flight route of the unmanned aerial vehicle may be maliciously adjusted to a return route so as to reload the UAV with the agrochemical. Here, on the way back, farmland under the return route may be sprayed.

Optionally, before the flight route is adjusted to the return route, the return route may be planned according to the remaining chemical amount and areas where the target objects have not been sprayed with the chemical, so that a certain whole area can be sprayed with the chemical on the way back.

Optionally, before controlling the unmanned aerial vehicle to spray a chemical on the target objects according to the distribution information, image information of the target area may be acquired by an image capturing device. The image information is input into a preset model to determine, in the image information, distribution information of the target objects in the target area, and a target amount of the chemical to be used from the unmanned aerial vehicle is determined according to a size of a distribution area of the target object in the target area and a density of the target objects in the distribution area, in the distribution information.

Optionally, a target amount of the chemical to be used is determined according to a small size of a distribution area of the target objects in the target area and a high density of the target objects in the distribution area, in the distribution information. A target amount of the chemical to be used is determined according to a large size of a distribution area of the target objects in the target area and a low density of the target objects in the distribution area, in the distribution information. A target amount of the chemical to be used is determined according to a small size of a distribution area of the target objects in the target area and a low density of the target objects in the distribution area, in the distribution information. A target amount of the chemical to be used is determined according to a large size of a distribution area of the target objects in the target area and a high density of the target objects in the distribution area, in the distribution information. The unmanned aerial vehicle is loaded with the agrochemical after the target amount of the chemical to be used is determined.

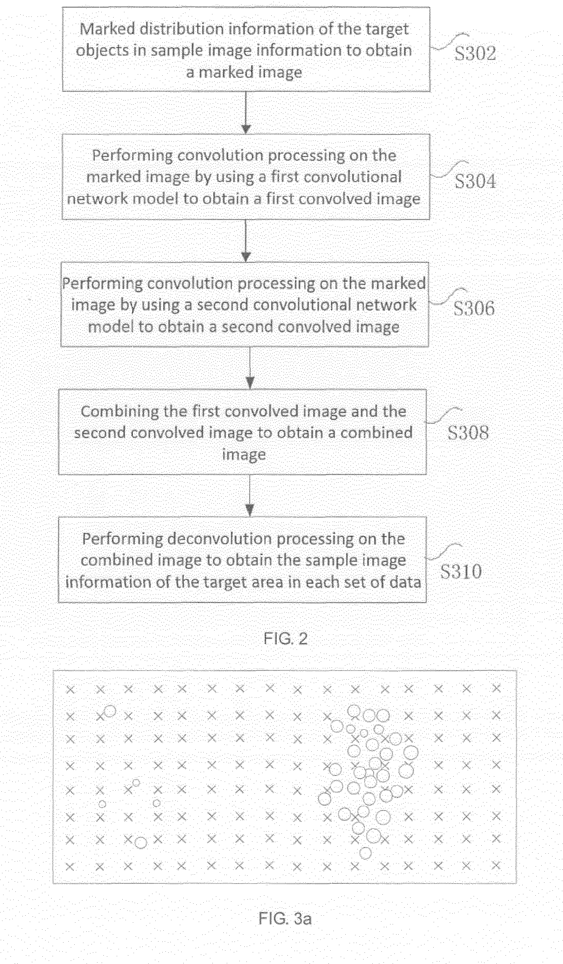

Referring to FIG. 2, a method of training the preset model may include the following steps.

In step S302, sample image information is acquired, the positions of the target objects in the sample image information are marked to obtain a label of the distribution information of the target objects corresponding to the sample image information.

Optionally, an image corresponding to the sample image information is an RGB image.

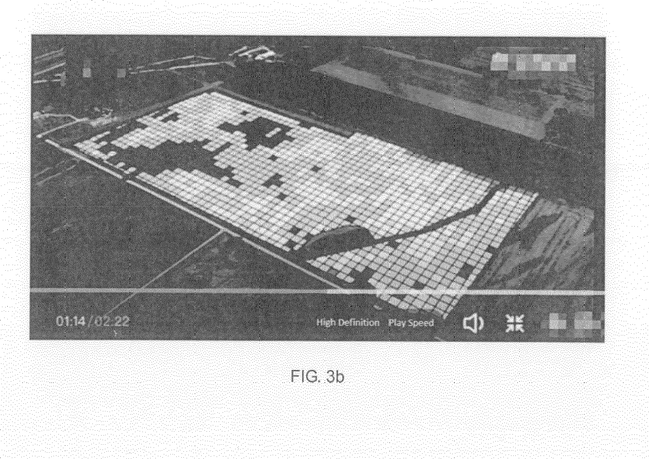

Optionally, the distribution information of the target objects in the sample image information may be identified by a label or tag. The label includes a latitude and longitude range of distribution of the target objects in the target area and/or a pixel distribution range of the target objects in the image. For example, referring to FIG. 3a, a cross "x" may be used for indicating a crop area, and a circle "O" may be used for indicating a weed area. Referring to FIG. 3b, FIG. 3b shows the identification of the target objects on a real electronic map, where dark regions represent weeds and light regions represent crops.

In step S304, the sample image information is processed by using a first convolutional network model in the preset model to obtain a first convolved image of the sample image information.

In step S306, the sample image information is processed by using a second convolutional network model in the preset model to obtain a second convolved image of the sample image information, wherein different convolution kernels are used in the first convolutional network model and the second convolutional network model.

Optionally, the convolution kernel in the first convolutional network model may have a size of 3*3, with a convolution stride set to 2.

Optionally, the sample image information is an RGB image with three dimensions of R, G, and B. Down-sampling may be performed in the process of convoluting the labeled or marked image using the first convolutional network model to obtain a first convolved image. In addition, the dimensions of the first convolved image may be set.

Optionally, multiple convolutions may be performed in the process of convoluting the labeled image using the first convolutional network model to obtain the first convolved image. In each convolution, the convolution kernel has a size of 3*3 with a convolution stride of 2, and down-sampling is performed in each convolution. An image obtained after each down-sampling is 1/2 the size of the image before being down-sampled. In this way, the amount of data processing can be greatly reduced, and the speed of data calculation can be increased.

Optionally, the convolution kernel in the second convolutional network model may be set to a size of 5*5, with a convolution stride set to 2.

The sample image information is an RGB image with three dimensions of R, G, and B. Down-sampling may be performed in the process of convoluting the labeled image using the second convolutional network model to obtain a second convolved image. In addition, the dimensions of the second convolved image may be set.

Optionally, multiple convolutions may be performed in the process of convoluting the labeled image using the second convolutional network model to obtain the second convolved image. In each convolution, the convolution kernel of 5*5 is used with a convolution stride of 2, and down-sampling is performed in each convolution. An image obtained after each down-sampling is 1/2 the size of the image before being down-sampled. In this way, the amount of data processing can be greatly reduced, and the speed of data calculation can be increased.

The first convolved image and the second convolved image have the same image size.

In step S308, the first convolved image and the second convolved image of the sample image information are combined to obtain a combined image.

In step S310, deconvolution processing on the combined image is performed, and backpropagation is performed according to the result of the deconvolution processing and the label of the sample image information to adjust parameters for each part of the preset model.

Optionally, after the first convolved image and the second convolved image are combined, the combined image should be deconvolved for the same number of times as the number of convolutions from the sample image information to the first image described above, and the dimensions of the deconvolved image may be set.

During the deconvolution of the combined image, the deconvolution kernel may be set to a size of 3*3.

After the combined image is deconvolved, the image size is the same as the size of the sample image information.

Finally, backpropagation is performed according to the result of the deconvolution processing and the label of the sample image information to adjust parameters for each layer of the preset model.

By training a preset model with multiple sample images, the preset model can be imparted with the capability of recognizing the positions of target objects distributed in an image to be processed.

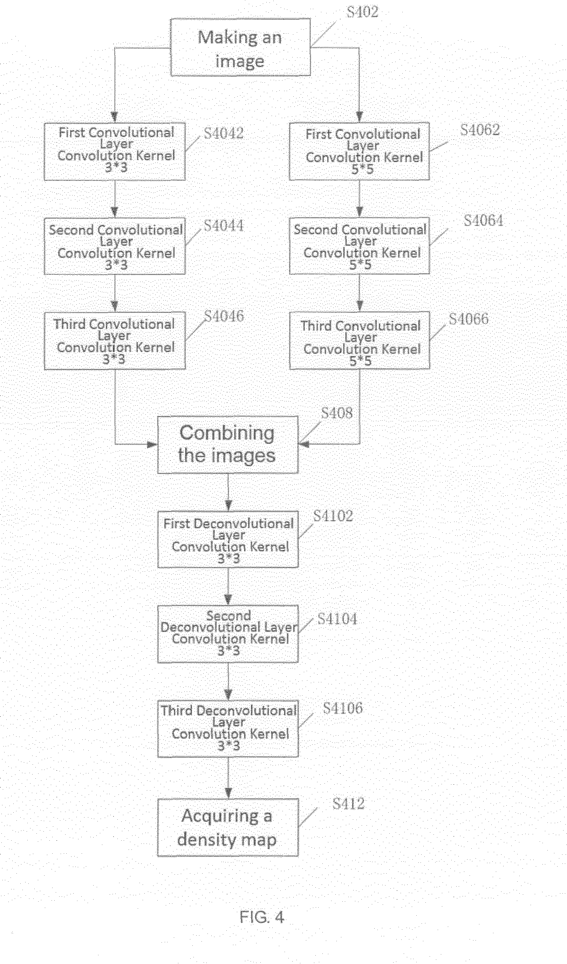

FIG. 4 is a schematic flowchart of another method for acquiring sample image information of a target area included in each set of data according to this embodiment. The method includes the following steps.

In step S402, sample image information is acquired, the positions of the target objects in the sample image information are marked to obtain a label of the distribution information of the target objects corresponding to the sample image information, and the sample image and the corresponding label are input into a preset model.

Optionally, an image corresponding to the sample image information is an RGB image.

Optionally, the distribution information of the target objects in the sample image information may be identified by a label or tag. The label includes a latitude and longitude range of distribution of the target objects in the target area and/or a pixel distribution range of the target objects in the image.

The sample image information is processed by using a first convolutional network model in the preset model to obtain a first convolved image of the sample image information.

Optionally, the convolution kernel in the first convolutional network model may have a size of 3*3, with a convolution stride set to 2. An image corresponding to the sample image information is an RGB image with three dimensions of R, G, and B. Down-sampling may be performed in the process of convoluting the labeled image using the first convolutional network model to obtain a first convolved image. In addition, the dimensions of the first convolved image may be set.

As shown in FIG. 4, a total of three convolutions, namely, step S4042, step S4044, and step S4046, are performed in the process of obtaining the first convolved image. In each convolution, down-sampling is performed, with a convolution stride set to 2. An image obtained after each down-sampling is 1/2 the size of the image before being down-sampled. In this way, the amount of data processing can be greatly reduced, and the speed of data calculation can be increased.

In FIG. 4, n1, n2, and n3 are corresponding to dimensions correspondingly set in each convolution, respectively. The dimension is used for representing a data vector length corresponding to each pixel of the first convolved image. In an example, when n1 is 1, pixels of an image obtained after the first convolution correspond to one dimension, and data corresponding to the pixels may be gray values. When n1 is 3, pixels of an image obtained after the first convolution correspond to three dimensions, and data corresponding to the pixels may be RGB values. In the process of convoluting the labeled image using the first convolutional network model to obtain the first convolved image, multiple convolutions may be performed, and a convolution kernel of 3*3 is used in each convolution.

Moreover, the sample image information is processed by using a second convolutional network model in the preset model to obtain a second convolved image of the sample image information, wherein different convolution kernels are used in the first convolutional network model and the second convolutional network model.

Optionally, the convolution kernel in the second convolutional network model may be set to a size of 5*5, with a convolution stride set to 2. An image corresponding to the sample image information is an RGB image with three dimensions of R, G, and B. Down-sampling may be performed in the process of convoluting the labeled image using the second convolutional network model to obtain a second convolved image. In addition, the dimensions of the second convolved image may be set.

Optionally, multiple convolutions may be performed in the process of convoluting the labeled image using the second convolutional network model to obtain the second convolved image. In each convolution, the convolution kernel of 5*5 is used with a convolution stride set to 2, and down-sampling is performed in each convolution. An image obtained after each down-sampling is 1/2 the size of the image before being down-sampled. In this way, the amount of data processing can be greatly reduced, and the speed of data calculation can be increased.

As shown in FIG. 4, a total of three convolutions, namely, step S4062, step S4064, and step S4066, are performed in the process of obtaining the second convolved image. In each convolution, down-sampling is performed, with a convolution stride set to 2. An image obtained after each down-sampling is 1/2 the size of the image before being down-sampled. In this way, the amount of data processing can be greatly reduced, and the speed of data calculation can be increased.

In FIG. 4, m1, m2, and m3 are corresponding to dimensions correspondingly set in each convolution, respectively. The dimension is used for representing a data vector length corresponding to each pixel of the second convolved image. In an example, when m1 is 1, pixels of an image obtained after the first convolution correspond to one dimension, and data corresponding to the pixels may be gray values. When m1 is 3, pixels of an image obtained after the first convolution correspond to three dimensions, and data corresponding to the pixels may be RGB values. In the process of convoluting the labeled image using the second convolutional network model to obtain the second convolved image, multiple convolutions may be performed, and a convolution kernel of 5*5 is used in each convolution.

The first convolved image and the second convolved image have the same image size.

In step S408, the first convolved image and the second convolved image of the sample image information are combined to obtain a combined image.

Deconvolution processing on the combined image is performed.

Optionally, the combined image is deconvolved for the same number of times as the number of convolutions from the sample image information to the first image described above, and the dimensions of the deconvolved image may be set. There deconvolutions of the combined image, namely, step S4102, step S4104, and step S4106, are performed, thereby obtaining a density map, i.e., the sample image information of the target area (in step S412).

During the deconvolution of the combined image, the deconvolution kernel may be set to a size of 3*3.

After the combined image is deconvolved, the image size is the same as the size of the sample image information.

Deconvolution processing on the combined image is performed, and backpropagation is performed according to the result of the deconvolution processing and the label of the sample image information to adjust parameters for each layer of the preset model.

By training a preset model with multiple sample images, the preset model can be imparted with the capability of recognizing the positions of target objects distributed in an image to be processed.

Correspondingly, when the preset model is used for image recognition processing, image information to be processed may be input into the trained preset model.

The image information to be processed is processed by using the first convolutional network model in the preset model to obtain a first convolved image of the image information to be processed.

The image information to be processed is processed by using the second convolutional network model in the preset model to obtain a second convolved image of the image information to be processed.

The first convolved image and the second convolved image of the image information to be processed are combined, and deconvolution processing on the combined image is performed to obtain a density map corresponding to the image information to be processed as distribution information of the target objects in the image information to be processed. Here, a value of a pixel in the density map denotes a value of distribution density of the target objects at a position corresponding to the pixel.

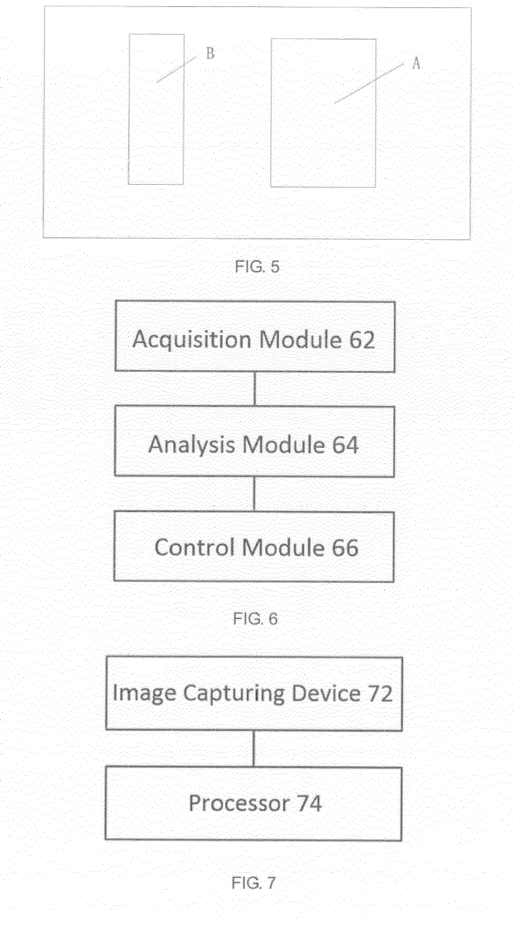

Optionally, the density map has a mark (or identifier) for indicating the magnitude of the density of the target objects. For example, in the density map, a distribution area with a lighter color has a higher density of the target objects. As shown in FIG. 5, FIG. 5 is a density map obtained after the processing. In FIG. 5, if area A is shown with a lighter color than area B, the area A has a higher density of the aggregated target objects. In another example, the value of a pixel in the density map denotes the value of distribution density of the target objects at a position corresponding to the pixel.

Optionally, the density map obtained after the deconvolution may be a grayscale image. When a grayscale image is obtained by the deconvolution, in the image with a white value of 255 and a black value of 0, a place with a larger gray value indicates a denser distribution of the target objects in the target area. In other words, weeds are distributed more densely at places with darker colors; and weeds are distributed more sparsely at places with lighter colors.

In this embodiment, image information of a target area is analyzed by using a preset model so as to obtain distribution information of a target object in the target area, and an unmanned aerial vehicle is controlled to spray a chemical on the target objects based on the distribution information. Image information of a target area is acquired; the image information is input to a preset model for analysis so as to obtain distribution information of a target object in the target area, where the preset model is obtained by being trained with multiple sets of data, each of the multiple sets of data including: image information of a target area, and a label for identifying distribution information of the target objects in the image information; and an unmanned aerial vehicle is controlled to spray a chemical on the target objects according to the distribution information. This accomplishes the purpose of targetedly controlling a spray amount of a chemical depending on the distribution density of weeds in different areas, so as to achieve the technical effect of setting a spray amount of a chemical in connection with the distribution density of weeds in different areas, reducing the use of agrochemicals, and increasing the spraying efficiency, thereby solving the technical problems in the related art, such as waste of agrochemicals and agrochemical residues caused by difficulty in distinguishing crops from weeds.

FIG. 6 is a schematic structural diagram of an optional device for controlling an unmanned aerial vehicle according to an embodiment. As shown in FIG. 6, the device includes an acquisition module 62, an analysis module 64, and a control module 66.

The acquisition module 62 is configured to acquire image information of a target area.

The analysis module 64 is configured to input the image information to be processed into a preset model for analysis so as to obtain distribution information of a target object in the image information to be processed, wherein the preset model is obtained by being trained with multiple sets of data, each of the multiple sets of data including: sample image information of a target area, and a label for identifying distribution information of the target objects in the sample image information.

The control module 66 is configured to control the unmanned aerial vehicle to spray a chemical on the target objects according to the distribution information corresponding to the image information to be processed.

It should be noted that the specific functions of the modules of the device for controlling an unmanned aerial vehicle can be understood with reference to the related description of the steps shown in FIG. 1 and therefore will not be described in detail herein.

FIG. 7 is a schematic structural diagram of an optional unmanned aerial vehicle according to an embodiment. As shown in FIG. 7, the unmanned aerial vehicle includes an image capturing device 72 and a processor 74.

The image capturing device 72 is configured to acquire image information to be processed of a target area.

The processor 74 is configured to: input the image information to be processed into a preset model for analysis so as to obtain distribution information of a target object in the image information to be processed, wherein the preset model is obtained by being trained with multiple sets of data, each of the multiple sets of data including: sample image information of a target area, and a label for identifying distribution information of the target objects in the sample image information; and control the unmanned aerial vehicle to spray a chemical on the target objects according to the distribution information corresponding to the image information to be processed.

It should be noted that the specific functions of the unmanned aerial vehicle can be understood with reference to the related description of the steps shown in FIG. 1 and therefore will not be described in detail herein.

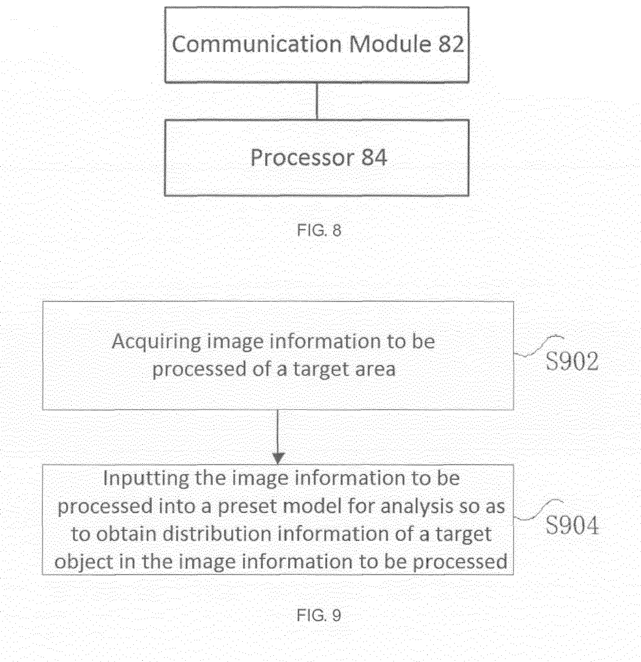

FIG. 8 is a schematic structural diagram of an optional equipment for controlling an unmanned aerial vehicle according to an embodiment. As shown in FIG. 8, the equipment includes an image acquisition device 82 and a processor 84.

The communication module 82 is configured to receive image information to be processed of a target area from a specified equipment.

The processor 84 is configured to: input the image information to be processed into a preset model for analysis so as to obtain distribution information of a target object in the image information to be processed, wherein the preset model is obtained by being trained with multiple sets of data, each of the multiple sets of data including: sample image information of a target area, and a label for identifying distribution information of the target objects in the sample image information; and control the unmanned aerial vehicle to spray a chemical on the target objects according to the distribution information corresponding to the image information to be processed.

It should be noted that the functions of the equipment for controlling an unmanned aerial vehicle can be understood with reference to the related description of the steps shown in FIG. 1 and therefore will not be described in detail herein.

FIG. 9 is a schematic flowchart of a method for determining distribution information according to an embodiment. As shown in FIG. 9, the method includes:
step S902 of acquiring image information to be processed of a target area; and
step S904 of inputting the image information to be processed into a preset model for analysis so as to obtain distribution information of a target object in the image information to be processed, wherein the preset model is obtained by being trained with multiple sets of data, each of the multiple sets of data including: sample image information, and a label for identifying distribution information of the target objects in the sample image information.

Optionally, the step of training the preset model includes: acquiring sample image information, marking positions of the target objects in the sample image information, so as to obtain a label of distribution information of the target objects corresponding to the sample image information, and inputting the sample image information and the corresponding label into a preset model; processing the sample image information by using a first convolutional network model in the preset model to obtain a first convolved image of the sample image information; processing the sample image information by using a second convolutional network model in the preset model to obtain a second convolved image of the sample image information, wherein different convolution kernels are used in the first convolutional network model and the second convolutional network model; combining the first convolved image and the second convolved image of the sample image information to obtain a combined image; performing deconvolution processing on the combined image, and performing backpropagation according to the result of the deconvolution processing and the label of the sample image information to adjust parameters for each part of the preset model.

Correspondingly, the step of processing the image information to be processed by using the preset model includes: inputting the image information to be processed into the trained preset model; processing the image information to be processed by using the first convolutional network model in the preset model to obtain a first convolved image of the image information to be processed; processing the image information to be processed by using the second convolutional network model in the preset model to obtain a second convolved image of the image information to be processed; combining the first convolved image and the second convolved image of the image information to be processed, and performing deconvolution processing on the combined image to obtain a density map corresponding to the image information to be processed as distribution information of the target objects in the image information to be processed.

Optionally, a value of a pixel in the density map denotes a value of distribution density of the target objects at a position corresponding to the pixel.

Optionally, the density map is used for reflecting a magnitude of density of the target objects in each distribution area in the target area. Here, the density map has a mark (or identifier) for indicating the magnitude of the density of the target objects. The mark may be different colors or different shades of the same color or digital information or the like.

Optionally, when there are multiple target areas and the multiple target areas are located in different sales areas, a target sales area of a chemical is determined according to a density map of the target objects in the multiple target areas. For example, a larger amount of the chemical is required for a sales area with a higher density indicated in the density map, whereby a target sales area is indirectly determined.

The above-mentioned distribution information may further include: a distribution area of the target objects in the target area. In this case, a flight route of an unmanned aerial vehicle may be determined according to the position of the distribution area of the target objects.

Optionally, after the image information to be processed is input into a preset model for analysis so as to obtain distribution information of a target object in the image information to be processed, a prescription map of the target area may be determined according to the distribution information. The prescription map is used for presenting information indicating application of a chemical to the target area. Specifically, the type of the target object is determined; chemical application information indicating application of a chemical to each subarea in the target area is determined according to the type and the distribution information, the chemical application information including a type and a target spray amount of the chemical to be applied to the target objects in the subarea of the target area; and marking information for identifying the chemical application information is added to the image information of the target area to obtain a prescription map of the target area.

Here, the type of the target object may be determined by means of machine learning. For example, an image of the target object is input into a trained prediction model, and the type of the target object is recognized by using the prediction model.

It should be noted that the specific steps of the method for determining distribution information can be understood with reference to the related description of the steps shown in FIGS. 1 to 7 and therefore will not be described in detail herein.

According to a further aspect of the embodiments, a storage medium is further provided. The storage medium includes a program stored therein, wherein when the program is running, an equipment where the storage medium is located is controlled to execute the method for controlling an unmanned aerial vehicle described above.

According to a further aspect of the embodiments, a processor is further provided. The processor is configured to run a program, wherein the program is run to execute the method for controlling an unmanned aerial vehicle described above.

It should be understood that the techniques disclosed in the embodiments may be implemented in other ways. Here, the embodiments of the device described above are merely illustrative in nature. For example, the units may be divided by logical functions, and additional division modes may be adopted in practical implementation. For example, multiple units or components may be combined or integrated into another system, or some features may be omitted or not executed. In addition, the mutual coupling, or direct coupling or communication connection illustrated or discussed may be implemented via indirect coupling or communication between some communication interfaces, units, or modules, which may be electronic, mechanical, or in other forms.

The units described as separate components may be or not be separated physically. The components illustrated as units may be or not be physical units. In other words, they may be located at one place or they may be distributed onto multiple network units. Some or all of the units may be selected as actually required to fulfill the purposes of the solutions of the embodiments.

Besides, the individual functional units in the embodiments of the present disclosure may be integrated into one processing unit, or each of the units may be physically stand-alone, or two or more of the units may be integrated into one unit. The integrated unit described above may be implemented in a form of hardware or implemented in a form of a software functional unit.

When implemented in the form of a software functional unit and sold or used as an independent product, the integrated unit may be stored in a computer-readable storage medium. Based on such understanding, a technical solution of the present disclosure essentially, or the part thereof contributing to the prior art, or the entirety or a part of the technical solution may be embodied in the form of a software product. The computer software product is stored in a storage medium, and includes a number of instructions for causing a computer equipment (which may be a personal computer, a server, a network equipment, or the like) to execute all or some of the steps of the methods described in the embodiments of the present disclosure. The preceding storage medium includes any medium that can store program codes, such as a USB flash disk, a read-only memory (ROM), a random access memory (RAM), a mobile hard disk, a magnetic disk, or an optical disk.

The above description is merely illustrative of preferred embodiments of the present disclosure. It should be noted that several improvements and modifications can be made by those of ordinary skill in the art without departing from the principles of the present disclosure. Such improvements and modifications are also intended to be encompassed within the scope of protection of the present disclosure.

### Industrial Applicability

In an embodiment of the present disclosure, image information to be processed of a target area is acquired; the image information to be processed is input to a preset model for analysis so as to obtain distribution information of a target object in the image information to be processed, where the preset model is obtained by being trained with multiple sets of data, each of the multiple sets of data including: image information of a target area, and a label for identifying distribution information of the target objects in the image information; and an unmanned aerial vehicle is controlled to spray a chemical on the target objects according to the distribution information. This accomplishes the purpose of targetedly controlling a spray amount of a chemical depending on the distribution density of weeds in different areas, so as to achieve the technical effect of setting a spray amount of a chemical in connection with the distribution density of weeds in different areas, reducing the use of agrochemicals, and increasing the spraying efficiency, thereby solving the technical problems in the related art, such as waste of agrochemicals and agrochemical residues caused by difficulty in distinguishing crops from weeds.

## Claims

1. A method for determining distribution information, **characterized by** comprising:
acquiring image information to be processed of a target area; and
inputting the image information to be processed into a preset model for analysis, so as to obtain distribution information of target objects in the image information to be processed, wherein the preset model is obtained by being trained with multiple sets of data, and each of the multiple sets of data comprises: sample image information, and a label for identifying distribution information of target objects in the sample image information.

2. The method according to claim 1, wherein training the preset model comprises following steps:
acquiring sample image information, marking positions of target objects in the sample image information, so as to obtain a label of distribution information of the target objects corresponding to the sample image information, and inputting the sample image information and a corresponding label into a preset model;
processing the sample image information by using a first convolutional network model in the preset model, so as to obtain a first convolved image of the sample image information;
processing the sample image information by using a second convolutional network model in the preset model, so as to obtain a second convolved image of the sample image information, wherein different convolution kernels are used in the first convolutional network model and the second convolutional network model;
combining the first convolved image and the second convolved image of the sample image information, so as to obtain a combined image; and
performing deconvolution processing on the combined image, and performing backpropagation according to a result of the deconvolution processing and the label of the sample image information, so as to adjust parameters for each part of the preset model.

3. The method according to claim 2, wherein the inputting the image information to be processed into a preset model for analysis so as to obtain distribution information of target objects in the image information to be processed comprises:
inputting the image information to be processed into a trained preset model;
processing the image information to be processed by using the first convolutional network model in the preset model, so as to obtain a first convolved image of the image information to be processed;
processing the image information to be processed by using the second convolutional network model in the preset model, so as to obtain a second convolved image of the image information to be processed; and
combining the first convolved image and the second convolved image of the image information to be processed, and performing deconvolution processing on a combined image, so as to obtain a density map corresponding to the image information to be processed, as the distribution information of the target objects in the image information to be processed.

4. The method according to claim 3, wherein a value of a pixel in the density map denotes a value of a distribution density of the target objects at a position corresponding to the pixel.

5. The method according to claim 2, wherein the sample image information comprises: a density map of the target objects, wherein the density map is used for reflecting a magnitude of density of the target objects in each distribution area in the target area.

6. The method according to claim 5, wherein the density map has a mark for indicating the magnitude of the density of the target objects.

7. The method according to any one of claims 1 to 6, wherein when multiple target areas are present and the multiple target areas are located in different sales areas, a target sales area of a chemical is determined according to a density map of the target objects in the multiple target areas.

8. The method according to any one of claims 1 to 7, wherein
the distribution information comprises: a distribution area of the target objects in the target area, and
the method further comprises: determining a flight route of an unmanned aerial vehicle according to a position of the distribution area of the target objects.

9. The method according to any one of claims 1 to 8, further comprising, after inputting image information into a preset model for analysis so as to obtain distribution information of target objects in the target area,
determining a type of each of the target objects;
determining chemical application information of each subarea in the target area according to the type and the distribution information, wherein the chemical application information comprises a type and a target spray amount of the chemical to be applied to the target objects in a subarea of the target area; and
adding, to the image information of the target area, marking information for identifying the chemical application information, so as to obtain a prescription map of the target area.

10. The method according to claim 9, wherein the target area is a farmland to which the chemical is to be applied, and the target objects are weeds.

11. A method for controlling an unmanned aerial vehicle, **characterized by** comprising:
acquiring image information to be processed of a target area;
inputting the image information to be processed into a preset model for analysis, so as to obtain distribution information of target objects in the image information to be processed, wherein the preset model is obtained by being trained with multiple sets of data, and each of the multiple sets of data comprises: sample image information, and a label for identifying distribution information of target objects in the sample image information; and
controlling the unmanned aerial vehicle to spray a chemical on the target objects according to the distribution information corresponding to the image information to be processed.

12. The method according to claim 11, wherein the distribution information comprises at least one of: a density of the target objects in each distribution area in the target area, and a size of a distribution area where the target objects are located, and
the controlling the unmanned aerial vehicle to spray a chemical on the target objects according to the distribution information comprises:
determining, according to the density of the target objects in the distribution area, an amount or a duration of spray of the chemical to be sprayed from the unmanned aerial vehicle onto the distribution area; and/or
determining a spraying range for the chemical according to the size of the distribution area where the target objects are located.

13. The method according to claim 11 or 12, wherein the target area is a farmland to which the chemical is to be applied, and the target objects are weeds,
the distribution information further comprises: a distribution area of the target objects in the target area, and
the method further comprises: determining a flight route of the unmanned aerial vehicle according to a position of the distribution area of the target objects; and controlling the unmanned aerial vehicle to move along the flight route.

14. The method according to any one of claims 11 to 13, further comprising, after the controlling the unmanned aerial vehicle to spray a chemical on the target objects according to the distribution information,
detecting remaining distribution areas in the target area for the unmanned aerial vehicle, wherein the remaining distribution areas are distribution areas in the target area which have not be sprayed with the chemical;
determining a density of the target objects in each of the remaining distribution areas and a total size of the remaining distribution areas;
determining a total amount of the chemical required in the remaining distribution areas according to the density of the target objects in each of the remaining distribution areas and the total size of the remaining distribution areas;
determining a difference between a chemical amount remaining in the unmanned aerial vehicle and the total amount of the chemical; and
comparing the difference with a preset threshold, and adjusting the flight route of the unmanned aerial vehicle according to a comparison result.

15. The method according to any one of claims 11 to 14, further comprising, before the controlling the unmanned aerial vehicle to spray a chemical on the target objects according to the distribution information,
determining a target amount of the chemical to be used from the unmanned aerial vehicle, according to a size of a distribution area of the target objects in the target area and a density of the target objects in the distribution area, which are included in the distribution information.

16. A device for controlling an unmanned aerial vehicle, **characterized by** comprising:
an acquisition module, configured to acquire image information to be processed of a target area;
an analysis module, configured to input the image information to be processed into a preset model for analysis, so as to obtain distribution information of target objects in the image information to be processed, wherein the preset model is obtained by being trained with multiple sets of data, and each of the multiple sets of data comprises: sample image information of the target area, and a label for identifying distribution information of target objects in the sample image information; and
a control module, configured to control the unmanned aerial vehicle to spray a chemical on the target objects according to the distribution information corresponding to the image information to be processed.

17. An unmanned aerial vehicle, **characterized by** comprising:
an image capturing device, configured to acquire image information to be processed of a target area; and
a processor, configured to input the image information to be processed into a preset model for analysis, so as to obtain distribution information of target objects in the image information to be processed, wherein the preset model is obtained by being trained with multiple sets of data, and each of the multiple sets of data comprises: sample image information of the target area, and a label for identifying distribution information of target objects in the sample image information; and control the unmanned aerial vehicle to spray a chemical on the target objects according to the distribution information corresponding to the image information to be processed.

18. An equipment for controlling an unmanned aerial vehicle, **characterized by** comprising:
an image acquisition device, configured to receive image information to be processed of a target area; and
a processor, configured to input the image information to be processed into a preset model for analysis, so as to obtain distribution information of target objects in the image information to be processed, wherein the preset model is obtained by being trained with multiple sets of data, and each of the multiple sets of data comprises: sample image information of the target area, and a label for identifying distribution information of target objects in the sample image information; and control the unmanned aerial vehicle to spray a chemical on the target objects according to the distribution information corresponding to the image information to be processed.

19. A storage medium, comprising a program stored therein, **characterized in that** when the program is running, an equipment where the storage medium is located is controlled to execute the method for determining distribution information according to any one of claims 1 to 10.

20. A processor, **characterized in that** the processor is configured to run a program, wherein the program is run to execute the method for determining distribution information according to any one of claims 1 to 10.
